# EUROPÄISCHE PATENTANMELDUNG

(11) **EP 2 128 072 A1**
(43) Veröffentlichungstag der Anmeldung: **02.12.2009**
(21) Anmeldenummer: 08157095.4
(22) Anmeldetag: 28.05.2008
(51) Int. Cl.: B66B 1/46, G09B 21/00, G06F 3/01

(54) **Bedienvorrichtung, insbesondere für eine Aufzugsanlage**

(71) Anmelder: Inventio AG, 6052 Hergiswil (CH)
(72) Erfinder: Behr, Ernst-Karl, Dr., 6353 Weggis (CH)
(74) Vertreter: Blöchle, Hans

(57) **Zusammenfassung**

Eine Bedienvorrichtung besitzt eine Eingabevorrichtung (12) mit wenigstens einem berührungsempfindlichen Eingabebereich. Damit diese Bedienvorrichtung von nicht behinderten und behinderten Benutzern gleichermaßen bedient werden kann, ist ferner wenigstens eine haptische Einrichtung (14; 15; 16) vorgesehen, die dem Benutzer ein haptisch wahrnehmbares Signal zum Erkennen eines berührungsempfindlichen Eingabebereichs und/oder einer Betätigung eines berührungsempfindlichen Eingabebereichs ausgibt. Eine solche Bedienvorrichtung ist insbesondere auch in Aufzugsanlagen in vorteilhafter Weise einsetzbar.

## Beschreibung

Die vorliegende Erfindung betrifft eine Bedienvorrichtung nach dem Oberbegriff des Anspruchs 1, insbesondere eine solche Bedienvorrichtung für eine Aufzugsanlage.

Bei elektrischen Geräten und Vorrichtungen kommen vermehrt Bedienvorrichtungen in der Art eines Flachbildschirms zum Einsatz, die eine Eingabevorrichtung mit mehreren berührungsempfindlichen Eingabebereichen aufweisen. Die Eingabebereiche können jeweils durch ein bloßes Berühren mit einem Finger, einem anderen Körperteil oder einem beliebigen Gegenstand betätigt werden. Die Betätigung eines Eingabebereichs, d.h. einer "Taste", kann zum Beispiel mit einem akustischen Signal quittiert werden. Solche Bedienvorrichtungen sind auch unter dem Begriff "Touch Screen" bekannt.

Derartige Bedienvorrichtungen sind optisch ansprechend, leicht zu reinigen und können grundsätzlich jede beliebige Tastatur nachbilden. Ihr mögliches Einsatzgebiet ist daher vielfältig. Zum Beispiel werden sie in elektrischen Haushaltsgeräten und auch als Dialogsysteme in Aufzugsanlagen eingesetzt. Im Fall einer Aufzugsanlage können diese Bedienvorrichtungen sowohl in der Aufzugskabine zum Wählen eines Zielstockwerks als auch neben den Schachttüren auf den einzelnen Stockwerken zum Rufen des Aufzuges angeordnet werden.

Für behinderte Personen, insbesondere für Seh- und/oder Hörbehinderte sind derartige Bedienvorrichtungen im Gegensatz zu Bedienvorrichtungen mit Drucktasten und dergleichen Schaltelementen allerdings nur bedingt geeignet. Bei Beeinträchtigung des Sehvermögens kann beispielsweise die "Tastatur" des Flachbildschirms nicht erkannt werden und bei Beeinträchtigung des Hörvermögens kann das akustische Quittungssignal nicht wahrgenommen werden.

Der Erfindung liegt daher die Aufgabe zugrunde, eine Bedienvorrichtung zu schaffen, die sowohl für Nichtbehinderte als auch für Behinderte geeignet ist.

Diese Aufgabe wird gelöst durch eine Bedienvorrichtung mit den Merkmalen des Anspruchs 1. Vorteilhafte Ausgestaltungen und Weiterbildungen der Erfindung sind Gegenstand der abhängigen Ansprüche.

Die erfindungsgemäße Bedienvorrichtung enthält eine Eingabevorrichtung mit wenigstens einem berührungsempfindlichen Eingabebereich sowie wenigstens eine haptische Einrichtung, die dem Benutzer ein haptisch wahrnehmbares Signal zum Erkennen eines berührungsempfindlichen Eingabebereichs und/oder zum Erkennen einer Betätigung eines berührungsempfindlichen Eingabebereichs ausgibt.

Durch das Vorsehen der haptischen Einrichtung zusätzlich zur Eingabevorrichtung wird dem Benutzer ein haptisch wahrnehmbares Signal ausgegeben, um einen berührungsempfindlichen Bereich der Eingabevorrichtung und/oder eine Betätigung eines berührungsempfindlichen Eingabebereichs erkennen zu können, sodass die Bedienung der Bedienung auch für behinderte Personen möglich ist. Gleichzeitig wird die Bedienung der Bedienvorrichtung durch nicht behinderte Personen nicht beeinträchtigt.

Im Folgenden werden zunächst einige der hier verwendeten Begriffe näher definiert und erläutert.

Die "behinderten Personen" umfassen insbesondere Personen mit einem eingeschränkten oder fehlenden Sehvermögen und/oder Hörvermögen.

Ein "berührungsempfindlicher Eingabebereich" der Eingabevorrichtung bildet eine Taste der Bedienvorrichtung, die durch bloßes Berühren mit einem Finger, einem anderen Körperteil oder einem Gegenstand betätigt werden kann. Im Stand der Technik sind zahlreiche berührungsempfindliche Eingabevorrichtungen bekannt, die zum Beispiel auf einem kapazitiven Effekt, einem induktiven Effekt, einem Piezo-Effekt, einem optischen Effekt oder dergleichen beruhen.

Die "haptische Wahrnehmung" umfasst die taktile Sinneswahrnehmung über mechanische, thermische und schmerzempfindliche Rezeptoren in der Haut sowie die kinästhetische oder propriozeptive Sinneswahrnehmung der auf den Körper wirkenden Kräfte. Die Ausgabe eines haptisch wahrnehmbaren Signals durch die haptische Einrichtung umfasst sowohl das stete Bereitstellen von Signalen als auch das Erzeugen von Signalen nur als Reaktion auf die Betätigung eines berührungsempfindlichen Eingabebereichs durch den Benutzer.

In einer Ausgestaltung der Erfindung weist die haptische Einrichtung eine auf der dem Benutzer zugewandten Seite der Bedienvorrichtung angeordnete Erhebung oder Vertiefung (als haptisch wahrnehmbares Signal) auf, die von dem Benutzer ertastbar ist. Diese Erhebung oder Vertiefung dient dem sehbehinderten Benutzer als Orientierungshilfe; sie kann entweder genau dem berührungsempfindlichen Eingabebereich entsprechen oder zu diesem korrespondierend angeordnet sein. Die Erhebung oder Vertiefung kann darüber hinaus auch mit einer Kennzeichnung versehen sein, die vom Benutzer ertastbar ist und Informationen über die Funktion des jeweiligen Eingabebereichs enthält. Die Erhebung bzw. Vertiefung dient bei entsprechender Kennzeichnung auch dem nicht behinderten Benutzer der Bedienvorrichtung als Eingabehilfe, da die Eingabebereiche genau gekennzeichnet werden können.

In einer weiteren Ausgestaltung der Erfindung weist die haptische Einrichtung eine Taktilitätsschicht auf, die in einem taktilen Bereich, der einem berührungsempfindlichen Eingabebereich der Eingabevorrichtung zugeordnet ist, ein von dem Benutzer wahrnehmbares Schaltverhalten erzeugt, das jenem einer Drucktaste entspricht. Bei einer leichten Druckbetätigung eines Eingabebereichs durch den Benutzer wird dem Benutzer durch die Taktilitätsschicht die Betätigung einer Drucktaste simuliert, sodass eine sehbehinderte Person erkennen bzw. fühlen kann, dass sie einen berührungsempfindlichen Eingabebereich der Eingabevorrichtung betätigt hat.

Diese Taktilitätsschicht kann in dem taktilen Bereich zum Beispiel einen Gewebeaufbau mit einem nicht-linearen Druckverhalten oder ein elastisches Element mit einem nicht-linearen Druckverhalten aufweisen.

In einer alternativen Ausgestaltung (welche optional auch kumulativ zum obigen Aufbau realisiert werden kann) weist die haptische Einrichtung eine Taktilitätsschicht auf, die in einem taktilen Bereich, der einem berührungsempfindlichen Eingabebereich der Eingabevorrichtung zugeordnet ist, eine von dem Benutzer wahrnehmbare Vibration erzeugt. Diese Vibration ist ein haptisch wahrnehmbares Signal, das entweder fortwährend erzeugt wird und so dem Benutzer als Orientierungshilfe dient oder nur bei Betätigung eines Eingabebereichs erzeugt wird und so als Bestätigung einer Betätigung des Eingabebereichs dient.

In weiterer Ausgestaltung der Erfindung weist die Bedienvorrichtung ferner auf der dem Benutzer abgewandten Seite der Eingabevorrichtung und der haptischen Einrichtung eine Beleuchtungsvorrichtung zum optischen Kennzeichnen des wenigstens einen berührungsempfindlichen Eingabebereichs der Eingabevorrichtung auf. In diesem Fall müssen die Eingabevorrichtung und die haptische Einrichtung in dem Bereich des wenigstens einen berührungsempfindlichen Eingabebereichs der Eingabevorrichtung zumindest teilweise transparent ausgebildet sein. Zusätzlich zu dieser Beleuchtungsvorrichtung kann auch die dem Benutzer zugewandte Seite der Bedienvorrichtung mit einer optischen Markierung (Farbe, Beschichtung, etc.) versehen sein.

Zusätzlich kann die Bedienvorrichtung auch eine akustische Vorrichtung zum Ausgeben eines akustischen Signals als Reaktion auf die Betätigung eines berührungsempfindlichen Eingabebereichs der Eingabevorrichtung durch den Benutzer aufweisen. Dieses akustische Signal dient sowohl nicht behinderten Personen als auch sehbehinderten Personen als Quittungssignal für die Betätigung eines Eingabebereichs. Das Quittungssignal kann im einfachsten Fall ein einfacher Ton sein, wahlweise ist aber auch ein Sprachsignal denkbar, das die durchgeführte Eingabe (z.B. eine Stockwerkswahl in einem Aufzug) bestätigt.

Die Bedienvorrichtung kann ferner mit einer Ausgabevorrichtung zum Ausgeben von optischen und/oder akustischen Informationssignalen versehen oder gekoppelt sein. Im Fall einer Aufzugsanlage kann dem Benutzer mit dieser Ausgabevorrichtung zum Beispiel das aktuelle Stockwerk der Aufzugskabine mitgeteilt werden.

Die Bedienvorrichtung ist vorzugsweise in der Art eines Flachbildschirms ausgebildet.

Außerdem kann die dem Benutzer zugewandte Seite der Bedienvorrichtung im Wesentlichen plan ausgebildet sein oder auch gewölbt oder gekrümmt ausgebildet sein.

Obige sowie weitere Merkmale und Vorteile der Erfindung werden aus der nachfolgenden Beschreibung bevorzugter, nicht-einschränkender Ausführungsbeispiele unter Bezugnahme auf die beiliegenden Zeichnungen besser verständlich. Darin zeigen:
- Fig.1: eine schematische Teilschnittansicht einer Bedienvorrichtung gemäß einem ersten Ausführungsbeispiel der vorliegenden Erfindung;
- Fig. 2: eine schematische Teilschnittansicht einer Bedienvorrichtung gemäß einem zweiten Ausführungsbeispiel der vorliegenden Erfindung;
- Fig. 3: eine schematische Teilschnittansicht einer Bedienvorrichtung gemäß einem dritten Ausführungsbeispiel der vorliegenden Erfindung; und
- Fig. 4: eine schematische Teilschnittansicht einer Bedienvorrichtung gemäß einem vierten Ausführungsbeispiel der vorliegenden Erfindung.

Die Figuren zeigen jeweils einen Ausschnitt einer Bedienvorrichtung gemäß der vorliegenden Erfindung im Schnitt. Dabei sind die einzelnen Komponenten bzw. Schichten der besseren Übersichtlichkeit halber getrennt voneinander dargestellt; selbstverständlich sind diese Schichten in der Praxis aber miteinander verbunden.

Die Bedienvorrichtung der Erfindung wird nachfolgend am Beispiel einer Bedienvorrichtung für eine Aufzugsanlage näher erläutert. Die Erfindung ist aber nicht nur auf diese vorteilhafte Anwendung beschränkt; die Bedienvorrichtung kann zum Beispiel auch bei Haushaltsgeräten eingesetzt werden, die mittels eines Touch Screens bedient werden.

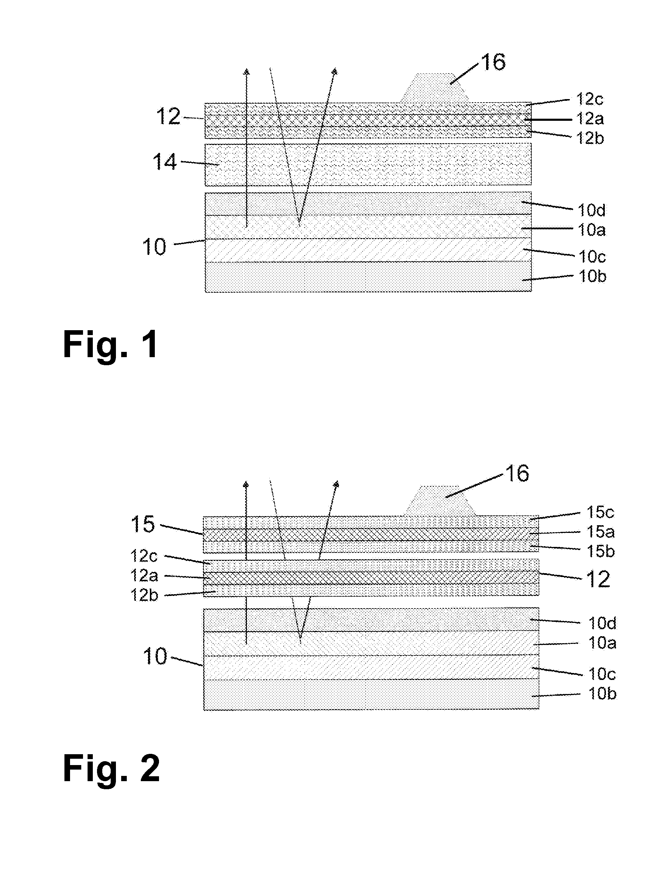

In Fig. 1 ist zunächst ein erstes Ausführungsbeispiel des grundsätzlichen Aufbaus einer Bedienvorrichtung im Schnitt dargestellt.

Die Bedienvorrichtung ist in der Art eines Flachbildschirms aufgebaut und enthält eine Eingabevorrichtung 12 mit wenigstens einem berührungsempfindlichen Eingabebereich. Mit anderen Worten basiert die Bedienvorrichtung der Erfindung auf einem berührungsempfindlichen Flachbildschirm, der auch als Touch Screen bezeichnet wird.

Zum Nachbilden einer Tastatur enthält die Eingabevorrichtung 12 eine Matrix 12a mit berührungsempfindlichen Eingabebereichen, welche zum Beispiel der Auswahl eines Zielstockwerks in einer Aufzugskabine entsprechen. Grundsätzlich sind mit einer solchen Eingabevorrichtung 12 beliebige Tastaturen bzw. Tastenanordnungen nachbildbar. Die berührungsempfindlichen Eingabebereiche basieren zum Beispiel auf einem kapazitiven Effekt, d.h. durch Berührung wird die Kapazität eines Sensorelements verändert, einem induktiven Effekt, einem Piezo-Effekt, einem optischen Effekt und dergleichen. Da berührungsempfindliche Eingabevorrichtungen dem Fachmann in zahlreichen verschiedenen Ausführungsformen bekannt sind und die Bedienvorrichtung auf keine spezielle Art einer solchen berührungsempfindlichen Eingabevorrichtung eingeschränkt ist, wird auf eine detailliertere Erläuterung des Aufbaus und der Funktionsweise verzichtet.

Die Matrix 12a der berührungsempfindlichen Eingabevorrichtung 12 ist vorzugsweise beidseitig mit einer Gewebeschicht 12b, 12c versehen.

Auf der dem Benutzer abgewandten Seite der Eingabevorrichtung 12 ist eine Beleuchtungsvorrichtung 10 angeordnet, mit welcher die berührungsempfindlichen Eingabebereiche der Eingabevorrichtung 12 für den Benutzer optisch gekennzeichnet werden können. Zu diesem Zweck muss die Eingabevorrichtung 12 in den berührungsempfindlichen Eingabebereichen natürlich zumindest teilweise transparent ausgebildet sein.

Die Beleuchtungsvorrichtung 10 enthält in dem Ausführungsbeispiel von Fig. 1 eine LCD-Matrix 10a entsprechend der berührungsempfindlichen Eingabematrix 12a, eine Hintergrundbeleuchtung 10b, ein erstes optisches Element (Glasschicht, Filter, Polarisator, etc.) 10c zwischen der Hintergrundbeleuchtung 10b und der LCD-Matrix 10a sowie ein zweites optisches Element (Glasschicht, Polarisator, etc.) 10d auf der der Eingabevorrichtung 12 zugewandten Seite der LCD-Matrix 10a.

Aufgrund dieser steifen Beleuchtungsvorrichtung 10 ist die dem Benutzer zugewandte Oberfläche der Bedienvorrichtung im Wesentlichen plan ausgebildet.

Um diese Bedienvorrichtung auch für behinderte Personen, insbesondere solche mit einem eingeschränkten oder gar fehlenden Sehvermögen und/oder Hörvermögen, nutzbar zu machen, weist die Bedienvorrichtung ferner verschiedene haptische Einrichtungen auf. Die haptischen Einrichtungen sind vorgesehen, um dem Benutzer ein haptisch wahrnehmbares Signal zum Erkennen eines berührungsempfindlichen Eingabebereichs und/oder zum Erkennen einer Betätigung eines berührungsempfindlichen Eingabebereichs der Eingabevorrichtung 12 auszugeben.

Als erste haptische Einrichtung ist in dem Ausführungsbeispiel von Fig. 1 eine Taktilitätsschicht 14 zwischen der Beleuchtungsvorrichtung 10 und der Eingabevorrichtung 12 angeordnet. Aufgrund der Beleuchtungsvorrichtung 10 ist diese Taktilitätsschicht 14 zumindest im Bereich der berührungsempfindlichen Eingabebereiche der Eingabevorrichtung 12 zumindest teilweise transparent auszubilden.

Die Taktilitätsschicht 14 ist so ausgebildet, dass sie in taktilen Bereich, die jeweils einem berührungsempfindlichen Eingabebereich der Eingabevorrichtung 12 zugeordnet sind, ein von dem Benutzer wahrnehmbares Schaltverhalten erzeugen, das jenem einer Drucktaste entspricht. Das heißt, dem Benutzer, der im Bereich eines berührungsempfindlichen Eingabebereichs der Eingabevorrichtung 12 einen leichten Druck auf die Oberfläche der Bedienvorrichtung ausübt, wird das Verhalten einer Drucktaste oder dergleichen simuliert, sodass der Benutzer erkennen bzw. fühlen kann, dass er einen berührungsempfindlichen Eingabebereich betätigt, auch wenn sein Sehvermögen eingeschränkt ist oder fehlt und er deshalb zum Beispiel die durch die Beleuchtungsvorrichtung bewirkte optische Markierung der Eingabebereiche nicht erkennen kann. Diese haptische Einrichtung 14 gibt also dem Benutzer als haptisch wahrnehmbares Signal ein Druckverhalten aus, das eine Rückmeldung zu den Fingern des Benutzers darstellt.

Die Taktilitätsschicht 14 weist zu diesem Zweck in ihren taktilen Bereichen einen Gewebeaufbau mit einem nicht-linearen Druckverhalten oder ein elastisches Element mit einem nicht-linearen Druckverhalten auf. Das elastische Element kann zum Beispiel durch Faserspiralen oder Lamellen mit einem speziell gestalteten Biege- und Torsionsverhalten gebildet sein.

Als weitere haptische Einrichtung ist in Fig. 1 eine Erhebung 16 auf der dem Benutzer zugewandten Seite der Bedienvorrichtung veranschaulicht. Obwohl nicht dargestellt, kann anstelle der Erhebung 16 auch eine Vertiefung vorgesehen sein. Zusätzlich kann die Erhebung 16 bzw. Vertiefung auch mit einer weiteren Kennzeichnung versehen sein, die vom Benutzer ertastet werden kann und Informationen über die Funktion des jeweiligen Eingabebereichs (z.B. in Blindenschrift oder als einfache Prägung) enthält. Außerdem sind natürlich auch mehrere Erhebungen bzw. Vertiefungen und Kombinationen von Erhebungen und Vertiefungen denkbar. Die Erhebung 16 bzw. Vertiefung gibt dem Benutzer ein haptisch wahrnehmbares Signal im Sinne der Erfindung aus und dient dem sehbehinderten Benutzer als Orientierungshilfe. Diese haptische Einrichtung 16 kann entweder genau dem berührungsempfindlichen Eingabebereich der Eingabevorrichtung 12 entsprechen oder diesem korrespondierend angeordnet sein.

Durch eine entsprechende optische Kennzeichnung dieser haptischen Einrichtung 16 kann diese auch einem nicht behinderten Benutzer der Bedienvorrichtung als Eingabehilfe dienen. Diese optische Kennzeichnung wird zum Beispiel durch die Beleuchtung der transparenten Einrichtung 16 von hinten oder durch eine Einfärbung, Beschichtung oder dergleichen erreicht.

Obwohl in der Darstellung von Fig. 1 nicht gezeigt, kann die Bedienvorrichtung optional weitere Komponenten enthalten. Es ist zu beachten, dass dies auch für die nachfolgend beschriebenen Ausführungsbeispiele der Fig. 2 bis 4 gilt, ohne dass diese optionalen Komponenten dort nochmals ausdrücklich aufgeführt werden.

Zum Beispiel kann die Bedienvorrichtung ferner eine akustische Vorrichtung zum Ausgeben eines akustischen Signals als Reaktion auf die Betätigung eines berührungsempfindlichen Eingabebereichs der Eingabevorrichtung 12 durch den Benutzer aufweisen. Im einfachsten Fall handelt es sich bei dem akustischen Signal um einen einfachen Quittungston. Alternativ ist als akustisches Signal auch eine Sprachausgabe möglich, die Informationen über den vom Benutzer betätigten Eingabebereich (z.B. "3. Etage") wiedergibt. Diese akustische Vorrichtung ist für nicht behinderte Personen und sehbehinderte Personen gleichermaßen nützlich.

Weiter kann die Bedienvorrichtung auch mit einer Ausgabevorrichtung zum Ausgeben von optischen und/oder akustischen Informationssignalen versehen oder gekoppelt sein. Zum Beispiel enthält die Bedienvorrichtung neben dem oben beschriebenen Tastaturbereich auch einen Displaybereich, in dem dem Benutzer beispielsweise das aktuelle Stockwerk einer Aufzugskabine angezeigt wird. Diese Ausgabevorrichtung ist für nicht behinderte Personen und hörbehinderte Personen gleichermaßen nützlich.

Bezug nehmend auf Fig. 2 wird nun eine Bedienvorrichtung gemäß einem zweiten Ausführungsbeispiel beschrieben. Dabei sind gleiche Komponenten mit den gleichen Bezugsziffern gekennzeichnet und bezüglich ihrer Funktionsweise wird auf deren Beschreibung im ersten Ausführungsbeispiel verwiesen.

Das zweite Ausführungsbeispiel unterscheidet sich von dem Ausführungsbeispiel von Fig. 1 durch die erste haptische Einrichtung. Während im ersten Ausführungsbeispiel zwischen der Beleuchtungsvorrichtung 10 und der Eingabevorrichtung 12 eine Taktilitätsschicht 14 zum Simulieren eines Drucktastenverhaltens angeordnet ist, ist in diesem Ausführungsbeispiel auf der dem Benutzer zugewandten Seite der Eingabevorrichtung 12 eine haptische Einrichtung 15 mit einer Taktilitätsschicht 15a vorgesehen, die in einem taktilen Bereich, der einem berührungsempfindlichen Eingabebereich der Eingabevorrichtung 12 zugeordnet ist, eine von dem Benutzer wahrnehmbare Vibration (haptisch wahrnehmbares Signal) erzeugt. Diese Vibration kann entweder nur bei Betätigung des entsprechenden Eingabebereichs durch den Benutzer erzeugt werden, um dem Benutzer die korrekte Betätigung zu bestätigen, oder andauernd erzeugt werden, um dem Benutzer die berührungsempfindlichen Eingabebereiche zu markieren.

In einer Ausführungsform ist die Taktilitätsschicht 15a eine Folienmatrix, welche die Vibrationen mittels des Piezo-Effekts erzeugt. Die Taktilitätsschicht 15a ist vorzugsweise beidseitig mit einer Gewebeschicht 15b, 15c versehen.

Falls eine Beleuchtungsvorrichtung 10 vorgesehen ist, wie in Fig. 2 dargestellt, muss auch diese haptische Einrichtung 15 natürlich zumindest in den Bereichen entsprechend den berührungsempfindlichen Eingabebereichen der Eingabevorrichtung 12 zumindest teilweise transparent ausgebildet sein.

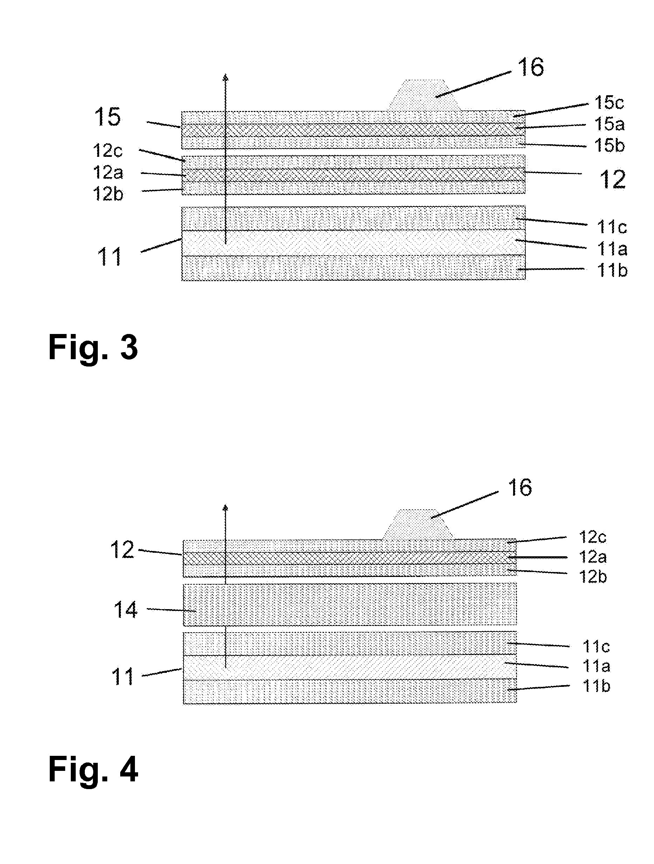

Unter Bezugnahme auf Fig. 3 wird nun eine Bedienvorrichtung gemäß einem dritten Ausführungsbeispiel erläutert. Dabei sind gleiche Komponenten mit den gleichen Bezugsziffern gekennzeichnet und bezüglich ihrer Funktionsweise wird auf deren Beschreibung im ersten bzw. zweiten Ausführungsbeispiel verwiesen.

Das dritte Ausführungsbeispiel unterscheidet sich von dem Ausführungsbeispiel von Fig. 2 durch die Art der Beleuchtungsvorrichtung 11. Während im ersten und zweiten Ausführungsbeispiel eine starre Beleuchtungsvorrichtung 11 mit einer LCD-Matrix 10a vorgesehen war, ist die Beleuchtungsvorrichtung 11 in diesem Ausführungsbeispiel flexibel ausgebildet.

Zu diesem Zweck enthält die Beleuchtungsvorrichtung 11 eine elektrolumineszierende Gewebematrix 11a anstelle der obigen LCD-Matrix 10a. Diese Gewebematrix 11a ist beidseitig mit einer Gewebeschicht 11b, 11c kombiniert.

Aufgrund der flexiblen Beleuchtungsvorrichtung 11 und des Schichtaufbaus der Bedienvorrichtung ist diese frei formbar. Insbesondere kann die dem Benutzer zugewandte Seite der Bedienvorrichtung im Wesentlichen plan sein oder in diesem Ausführungsbeispiel auch (konkav oder konvex) gewölbt sein oder ein- oder mehrfach gekrümmt ausgebildet sein.

Wegen der Beleuchtungsvorrichtung 11 müssen die Eingabevorrichtung 12 und die haptische Einrichtung 15 zumindest in den Bereichen entsprechend den berührungsempfindlichen Eingabebereichen der Eingabevorrichtung 12 zumindest teilweise transparent ausgebildet sein. Die Erhebungen 16 oder dergleichen sind ebenfalls transparent ausgebildet, evt. zusätzlich eingefärbt.

Eine Bedienvorrichtung gemäß einem vierten Ausführungsbeispiel wird nun anhand von Fig. 4 beschrieben. Dabei sind gleiche Komponenten wie in den obigen Ausführungsbeispielen mit den gleichen Bezugsziffern gekennzeichnet und bezüglich ihrer Funktionsweise wird auf deren Beschreibung in den vorherigen Ausführungsbeispielen verwiesen.

Die Bedienvorrichtung des vierten Ausführungsbeispiels ist im Wesentlichen eine Kombination der obigen ersten und dritten Ausführungsbeispiele.

Das heißt, diese Bedienvorrichtung weist eine flexible Beleuchtungsvorrichtung 11 mit einer elektrolumineszierenden Gewebematrix 11a oder dergleichen, eine haptische Einrichtung 14 in Form einer Taktilitätsschicht, die in den taktilen Bereich ein von dem Benutzer wahrnehmbares Drucktastenverhalten nachbildet, eine Eingabevorrichtung 12 mit berührungsempfindlichen Eingabebereichen und eine haptische Einrichtung 16 in Form von Erhebungen oder Vertiefungen auf.

Während in allen beschriebenen Ausführungsbeispielen eine Beleuchtungsvorrichtung 10 oder 11 vorgesehen ist, kann auch eine Bedienvorrichtung ohne eine solche Beleuchtungsvorrichtung 10, 11 realisiert werden. In diesem Fall ist die dem Benutzer zugewandte Oberfläche der Bedienvorrichtung mit optischen Kennzeichnungen zum Beispiel in Form einer Beschriftung, Einfärbung, Beschichtung oder dergleichen ausgebildet.

## Patentansprüche

1. Bedienvorrichtung, insbesondere für eine Aufzugsanlage, mit einer Eingabevorrichtung (12) mit wenigstens einem berührungsempfindlichen Eingabebereich,
**dadurch gekennzeichnet,**
**dass** ferner wenigstens eine haptische Einrichtung (14; 15; 16) vorgesehen ist, die dem Benutzer ein haptisch wahrnehmbares Signal zum Erkennen eines berührungsempfindlichen Eingabebereichs und/oder einer Betätigung eines berührungsempfindlichen Eingabebereichs ausgibt.

2. Bedienvorrichtung nach Anspruch 1,
**dadurch gekennzeichnet,**
**dass** die haptische Einrichtung (16) eine auf der dem Benutzer zugewandten Seite der Bedienvorrichtung angeordnete Erhebung (16) oder Vertiefung aufweist, die von dem Benutzer ertastbar ist.

3. Bedienvorrichtung nach Anspruch 1 oder 2,
**dadurch gekennzeichnet,**
**dass** die haptische Einrichtung (14) eine Taktilitätsschicht (14) aufweist, die in einem taktilen Bereich, der einem berührungsempfindlichen Eingabebereich der Eingabevorrichtung (12) zugeordnet ist, ein von dem Benutzer wahrnehmbares Schaltverhalten erzeugt, das jenem einer Drucktaste entspricht.

4. Bedienvorrichtung nach Anspruch 3,
**dadurch gekennzeichnet,**
**dass** die Taktilitätsschicht (14) in dem taktilen Bereich einen Gewebeaufbau mit einem nicht-linearen Druckverhalten aufweist.

5. Bedienvorrichtung nach Anspruch 3,
**dadurch gekennzeichnet,**
**dass** die Taktilitätsschicht (14) in dem taktilen Bereich ein elastisches Element mit einem nicht-linearen Druckverhalten aufweist.

6. Bedienvorrichtung nach Anspruch 1 oder 2,
**dadurch gekennzeichnet,**
**dass** die haptische Einrichtung (15) eine Taktilitätsschicht (15a) aufweist, die in einem taktilen Bereich, der einem berührungsempfindlichen Eingabebereich der Eingabevorrichtung (12) zugeordnet ist, eine von dem Benutzer wahrnehmbare Vibration erzeugt.

7. Bedienvorrichtung nach einem der vorhergehenden Ansprüche,
**dadurch gekennzeichnet,**
**dass** die Bedienvorrichtung ferner auf der dem Benutzer abgewandten Seite der Eingabevorrichtung (12) und der haptischen Einrichtung (14; 15; 16) eine Beleuchtungsvorrichtung (10; 11) zum optischen Kennzeichnen des wenigstens einen berührungsempfindlichen Eingabebereichs der Eingabevorrichtung (12) aufweist; und
**dass** die Eingabevorrichtung (12) und die haptische Einrichtung (14; 15; 16) in dem Bereich des wenigstens einen berührungsempfindlichen Eingabebereichs der Eingabevorrichtung (12) zumindest teilweise transparent ausgebildet sind.

8. Bedienvorrichtung nach einem der vorhergehenden Ansprüche,
**dadurch gekennzeichnet,**
**dass** die Bedienvorrichtung ferner eine akustische Vorrichtung zum Ausgeben eines akustischen Signals als Reaktion auf die Betätigung eines berührungsempfindlichen Eingabebereichs der Eingabevorrichtung (12) durch den Benutzer aufweist.

9. Bedienvorrichtung nach einem der vorhergehenden Ansprüche,
**dadurch gekennzeichnet,**
**dass** die Bedienvorrichtung ferner mit einer Ausgabevorrichtung zum Ausgeben von optischen und/oder akustischen Informationssignalen versehen oder gekoppelt ist.

10. Bedienvorrichtung nach einem der vorhergehenden Ansprüche,
**dadurch gekennzeichnet,**
**dass** die Bedienvorrichtung in der Art eines Flachbildschirms ausgebildet ist.

11. Bedienvorrichtung nach einem der Ansprüche 1 bis 10,
**dadurch gekennzeichnet,**
**dass** die dem Benutzer zugewandte Seite der Bedienvorrichtung im Wesentlichen plan ausgebildet ist.

12. Bedienvorrichtung nach einem der Ansprüche 1 bis 10,
**dadurch gekennzeichnet,**
**dass** die dem Benutzer zugewandte Seite der Bedienvorrichtung gewölbt oder gekrümmt ausgebildet ist.
